(19) **Europäisches Patentamt / European Patent Office / Office européen des brevets**

(11) **EP 4 586 153 A1**

(12) **EUROPEAN PATENT APPLICATION**
published in accordance with Art. 153(4) EPC

(43) Date of publication:
**16.07.2025 Bulletin 2025/29**

(21) Application number: **22960368.3**

(22) Date of filing: **30.09.2022**

(51) International Patent Classification (IPC):
*G06N 20/00* (2019.01)

(52) Cooperative Patent Classification (CPC):
**G06N 20/00**

(86) International application number:
**PCT/CN2022/123464**

(87) International publication number:
**WO 2024/065755 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **DONG, Lei
Shenzhen, Guangdong 518129 (CN)**
• **TANG, Hao
Shenzhen, Guangdong 518129 (CN)**
• **ZHANG, Liqing
Shenzhen, Guangdong 518129 (CN)**
• **MA, Jianglei
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57) This application provides a communication method and apparatus. The method includes: A first apparatus obtains first data; and the first apparatus may further determine, based on first diversity information, whether to send the first data. The first diversity information is determined based on the first data and a set of second data, and the second data includes historical data sent by the first apparatus and/or data indicated by a second apparatus. For example, the first data is training data. The first apparatus may determine the first diversity information based on the first data, and historically sent training data and/or specified training data, and determine, based on the first diversity information, whether to send the first data. In other words, the first apparatus does not need to send all training data. This can reduce transmission overheads.

FIG. 2a

**Description**

TECHNICAL FIELD

This application relates to the field of mobile communication technologies, and in particular, to a communication method and apparatus.

BACKGROUND

With continuous development of related technologies such as artificial intelligence (artificial intelligence, AI)/machine learning (machine learning, ML) and terminal sensing, the foregoing technologies have important application potential in many aspects such as complex unknown environment modeling and learning, channel prediction, intelligent signal generation and processing, network status tracking and intelligent scheduling, channel and service sensing, and network optimization deployment, and are of great significance and value to research on mobile communication technologies evolved after the 5th generation (5th generation, 5G), for example, the 6th generation (6th generation, 6G).

In related technologies such as AI/ML and sensing, a terminal device usually reports collected data to a network device, and the network device processes the received data. A processing result of the data may be used to optimize mobile network performance. To ensure accuracy of the processing result, the terminal device needs to send a large amount of data to the network device, resulting in extremely high communication overheads. In addition, with limited transmission resources, a large quantity of transmission requirements also cause an increase in interference and a decrease in a throughput, reducing processing accuracy.

SUMMARY

This application provides a communication method and apparatus, to reduce transmission overheads during data reporting while ensuring accuracy of data processing.

According to a first aspect, this application provides a communication method. The method may be implemented by a first apparatus, and the first apparatus may also be referred to as a communication apparatus. The first apparatus may be a terminal device, a network device, a component in the terminal device, or a component in the network device. The component in this application may include, for example, at least one of a chip, a chip system, a processor, a transceiver, a processing unit, or a transceiver unit. For example, an execution body is the first apparatus. The method may be implemented by using the following steps: The first apparatus obtains first data. The first apparatus may further determine, based on first diversity information, whether to send the first data, where the first diversity information is determined based on the first data and a set of second data, and the second data includes historical data sent by the first apparatus and/or data indicated by a second apparatus.

Based on the method shown in the first aspect, the first apparatus may determine, based on the first diversity information, whether to send the first data, and does not need to send all collected data, so that transmission overheads can be reduced. The first data may include training data or sensing data. Therefore, overheads of a process of reporting the training data and/or the sensing data can be reduced. For example, the first data is a channel characteristic. The first apparatus may determine the first diversity information at a granularity of the channel characteristic, and determine, based on the first diversity information, whether to send the channel characteristic for training.

In a possible implementation, the data indicated by the second apparatus may include a value and/or a type of the data indicated by the second apparatus.

Based on this implementation, the second apparatus may flexibly indicate, to the first apparatus, data that needs to be reported, so that the first apparatus reports data required by the second apparatus. This improves accuracy of a processing result obtained based on the data.

In a possible implementation, the first diversity information may be determined based on difference information between the first data and the second data.

Based on this implementation, the first apparatus may determine the first diversity information based on a difference between the first data and the second data. Therefore, the first apparatus may determine, based on the difference between the first data and the second data, whether to send the first data. In other words, the first diversity information may be used to measure whether the difference between the first data and the second data is significant. For example, when the first diversity information indicates that the difference between the first data and the second data is small, the first apparatus may not send the first data, to reduce transmission overheads. When the first diversity information indicates that the difference between the first data and the second data is large, the first apparatus may send the first data, to improve reliability of the processing result.

In a possible implementation, the first apparatus may further determine the first diversity information based on the difference information and a first correspondence, where the first correspondence may include a correspondence between the difference information and the first diversity information.

In view of this implementation, the difference information between the first data and the second data may correspond to the first diversity information. Therefore, after determining the difference information, the first apparatus may determine the first diversity information based on the first correspondence, to improve efficiency of determining the first information.

In a possible implementation, the difference information includes a set of first parameters, and the first apparatus may further determine the set of first parameters based on the first data and the set of second data. Each first parameter may include a difference between the first data and one or more pieces of second data.

Based on this implementation, the difference information may include one or more first parameters, so that a difference between the first data and each piece of second data can be more accurately reflected, and accuracy of the first diversity information can be improved.

In a possible implementation, the set of second data may include a plurality of pieces of second data, and the difference information may include a second parameter. The first apparatus may further determine a plurality of first parameters based on the set of first data and the set of second data. Each first parameter includes a difference between the first data and one or more pieces of second data, and the second parameter is an average value of the plurality of first parameters.

Based on this implementation, the difference information may include an average value of the plurality of first parameters, and a manner of determining the first diversity information based on the average value can reduce a data processing amount.

In a possible implementation, the set of second data may include a plurality of pieces of second data, the difference information may include a third parameter, and the first apparatus may further determine an average value of the plurality of pieces of second data. The third parameter is a difference between the first data and the average value.

Based on this implementation, the difference information may include the difference between the first data and the average value of the plurality of pieces of second data, and a manner of determining the first diversity information based on the difference can reduce a data processing amount.

In a possible implementation, the difference information includes at least one of a value difference, a distance difference, an amplitude difference, and a phase difference.

Based on this implementation, different types of difference information are determined in different manners, and an appropriate type of difference information may be selected based on a type of the first data.

In a possible implementation, the first apparatus receives first indication information from the second apparatus. The first indication information indicates that the difference information includes at least one of the value difference, the distance difference, the amplitude difference, and the phase difference.

Based on this implementation, the second apparatus may indicate a type of the difference information to the first apparatus, so that the first diversity information better meets a requirement of the second apparatus for diversity information of the training data.

In a possible implementation, the first diversity information may be further determined based on third data.

Based on this implementation, the first apparatus may determine the first diversity information based on at least the first data, the set of second data, and the third data. When data that needs to be sent by the first apparatus includes the first data and the third data, the first apparatus may determine the first diversity information based on a plurality of pieces of data that needs to be sent, to improve appropriateness of determining, based on the first diversity information, whether to send the data.

In a possible implementation, the first diversity information may be specifically determined based on second diversity information and third diversity information. The second diversity information may be determined based on the difference information between the first data and the second data. The third diversity information may be determined based on difference information between the third data and fourth data, and the fourth data includes the historical data sent by the first apparatus and/or the data indicated by the second apparatus. It may be understood that, for the second diversity information, refer to the foregoing descriptions of determining the first diversity information based on the difference information. In addition, for the third diversity information, refer to the foregoing descriptions of determining the first diversity information based on the difference information. A difference lies in that the first data and the second data are respectively replaced with the third data and the fourth data.

Based on this implementation, the first diversity information may be determined based on the difference information between the first data and the second data and the difference information between the third data and the fourth data, so that accuracy of determining the first diversity information can be improved.

In a possible implementation, the first diversity information may be determined based on a value of the second diversity information, a second threshold corresponding to the second diversity information, a value of the third diversity information, and a third threshold corresponding to the third diversity information. Optionally, the first diversity information may be determined based on a value relationship between the second diversity information and the second threshold and a value relationship between the third diversity information and the third threshold.

Based on this implementation, the first diversity information may be determined based on the second diversity information, the second threshold, the third diversity information, and the third threshold, to improve accuracy of determining the first diversity information. Optionally, the second threshold and the third threshold may be respectively related to manners of determining the second diversity information and the third diversity information. In this way, accuracy of determining the first diversity information is further improved.

In a possible implementation, the first apparatus may further determine the first diversity information based on a first proportion and a second correspondence. The second correspondence may include a correspondence between the first proportion and the first diversity information. The first proportion may be determined based on a quantity of diversity information that is in the diversity information set and whose value is greater than a threshold corresponding to the diversity information and a quantity of diversity information included in the diversity information set. The diversity information set may include the second diversity information and the third diversity information. In other words, the threshold corresponding to the diversity information includes the second threshold and the third threshold.

Based on this implementation, the first apparatus may specifically determine the first diversity information based on a proportion of the diversity information that is in the plurality of pieces of data that need to be sent and whose value is greater than the corresponding threshold. Therefore, the first diversity information can be used to accurately measure a difference between each of the plurality of pieces of data that need to be sent and corresponding historical data or data indicated by the second apparatus. Therefore, it is more accurately determined whether to send data.

In a possible implementation, the first apparatus may further determine, based on the first diversity information and the first threshold, whether to send the third data.

Based on this implementation, the first apparatus may further determine, based on the first diversity information, whether to send the third data. Therefore, the first apparatus may determine, based on the first diversity information, whether to send the first data and/or the third data. That is, the first apparatus is supported in determining, based on the first diversity information, whether to send a plurality of pieces of data, to improving determine efficiency.

In a possible implementation, the first apparatus may determine, based on the first diversity information and the first threshold, whether to send the first data.

Based on this implementation, if the first apparatus sends the first data when the first diversity information is greater than the first threshold, the first apparatus may send only data with high diversity, and does not need to send data with low diversity. Therefore, transmission overheads can be reduced. Optionally, the first threshold may be set based on a requirement for reducing transmission overheads and a precision requirement for data processing. For example, when the first diversity information is greater than the first threshold, the first apparatus determines to send the first data. When an amount of data sent by the first apparatus needs to be reduced to reduce transmission overheads, a value of the first threshold may be increased. When an amount of data sent by the first apparatus needs to be increased to improve data processing precision, a value of the first threshold may be reduced. Data processing may include training or sensing analysis performed based on the data.

In a possible implementation, the first data and/or the third data include/includes training data and/or sensing data.

According to a second aspect, a communication apparatus is provided. The apparatus may implement the method according to any possible design of the first aspect. The apparatus has a function of the first terminal apparatus. The apparatus is, for example, a terminal device corresponding to the first terminal apparatus, or a function module in the terminal device.

In an optional implementation, the apparatus may include modules that are in one-to-one correspondence with the methods/operations/steps/actions described in the first aspect. The modules may be hardware circuits or software, or may be implemented by a combination of the hardware circuits and the software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in the first aspect, the apparatus may include a communication unit and a processing unit. The communication unit may be configured to obtain first data. The processing unit may be configured to determine, based on first diversity information, whether to send the first data.

Optionally, the processing unit may be further configured to determine the first diversity information based on difference information and a first correspondence.

Optionally, the difference information includes a set of first parameters. The processing unit may be further configured to determine the set of first parameters based on the first data and a set of second data.

Optionally, the set of second data includes a plurality of pieces of second data, and the difference information includes a second parameter. The processing unit may be further configured to determine a plurality of first parameters based on the first data and the set of second data, where the second parameter is an average value of the plurality of first parameters.

Optionally, the set of second data includes a plurality of pieces of second data, and the difference information includes a third parameter. The processing unit may be further configured to determine an average value of the plurality of pieces of second data, where the third parameter is a difference between the first data and the average value.

Optionally, the communication unit may be further configured to receive first indication information from the second apparatus, where the first indication information may indicate that the difference information includes at least one of a value difference, a distance difference, an amplitude difference, and a phase difference.

Optionally, the processing unit may be further configured to determine the first diversity information based on second diversity information and third diversity information.

Optionally, the processing unit may be further configured to determine the first diversity information based on a first proportion and a second correspondence.

Optionally, the processing unit may be further configured to determine, based on the first diversity information and a first threshold, whether to send third data.

Optionally, the processing unit may be further configured to determine, based on the first diversity information and a first threshold, whether to send the first data.

For descriptions of technical features and term explanations of the designs in the second aspect, refer to the descriptions in the first aspect. Details are not described again.

According to a third aspect, a computer-readable storage medium is provided. The computer-readable storage medium is configured to store a computer program or instructions, and when the computer program or the instructions are run, the method shown in the first aspect and any one of the possible implementations of the first aspect is implemented.

According to a fourth aspect, a computer program product including instructions is provided. When the computer program product runs on a computer, the method shown in the first aspect and any one of the possible implementations of the first aspect is implemented.

According to a fifth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to the first aspect and the possible implementations of the first aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a sixth aspect, an embodiment of this application further provides a first communication apparatus, configured to perform the method according to the first aspect and the possible implementations of the first aspect.

According to a seventh aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. For example, when the chip system is configured to implement a function of the first apparatus, the input/output interface may be configured to receive and obtain first data. The input/output interface may be a same interface, that is, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method shown in the first aspect and any one of the possible implementations of the first aspect. The logic circuit may be further configured to transmit a message to the input/output interface, or receive, from the input/output interface, a message from another communication apparatus. The chip system may be configured to implement the method according to the first aspect and any one of the possible implementations of the first aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to an eighth aspect, a communication system is provided. The communication system may include a first apparatus and a second apparatus. The first apparatus may be configured to perform the method according to the first aspect and any one of the possible implementations of the first aspect.

For technical effect brought by the second aspect to the eighth aspect, refer to the descriptions of the first aspect. Details are not described herein again.

BRIEF DESCRIPTION OF DRAWINGS

FIG. 1 is a diagram of an architecture of a wireless communication system according to this application;

FIG. 2a is a schematic flowchart of a communication method according to this application;

FIG. 2b is an interaction diagram of a communication method according to this application;

FIG. 3 is a diagram of a structure of a communication apparatus according to this application;

FIG. 4 is a diagram of a structure of another communication apparatus according to this application; and

FIG. 5 is a diagram of a structure of another communication apparatus according to this application.

DESCRIPTION OF EMBODIMENTS

Embodiments of this application provide a data transmission method and an apparatus. The method and an apparatus are based on a same inventive concept. Because the method and the apparatus have a similar problem-resolving principle, for implementations of the apparatus and the method, refer to each other, and no repeated description is provided. In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In this application, "at least one" means one or more, and "a plurality of" means two or more. In addition, it should be understood that in description of this application, terms such as "first", "second", and the like are merely used for distinguishing and description, but should not be understood as indicating or implying relative importance, or should not be understood as indicating or implying a sequence.

The data transmission method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or applied to various communication systems evolved after 5G, for example, a 6th generation (6th generation, 6G) communication system. The method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system. The satellite communication system may be integrated with the foregoing communication system.

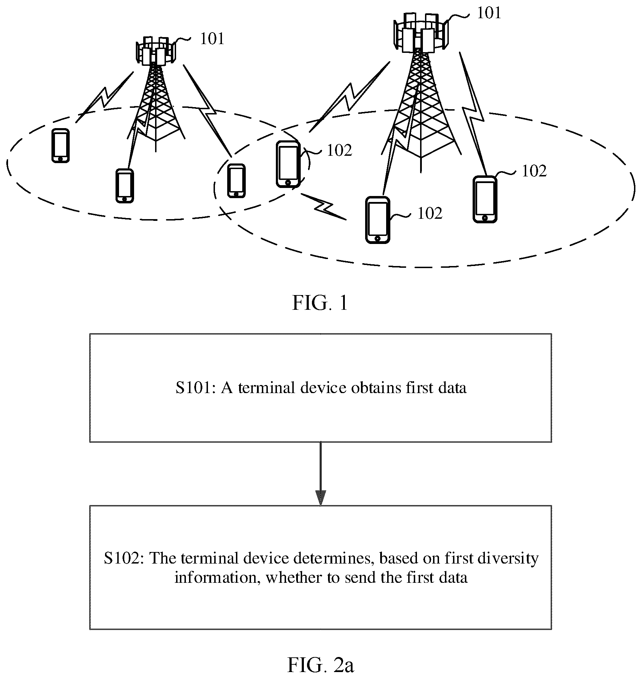

For ease of understanding of embodiments of this application, an application scenario used in this application is described by using a communication system architecture shown in FIG. 1 as an example. As shown in FIG. 1, a communication system 100 includes a network device 101 and a terminal device 102. The apparatus provided in embodiments of this application may be applied to the network device 101 or the terminal device 102. It may be understood that FIG. 1 shows only one possible communication system architecture to which embodiments of this application may be applied. In another possible scenario, the communication system architecture may alternatively include another device.

Optionally, based on the architecture shown in FIG. 1, communication may be performed between the network device 101 and the terminal device 102, between different network devices 101, and between different terminal devices 102. For example, the terminal device 102 may communicate with the network device 101 through a radio air interface. For another example, different network devices 101 may communicate with each other in a wired manner. For another example, different terminal devices 102 may communicate with each other through a direct communication interface.

The network device 101 is a node in a radio access network (radio access network, RAN), and may also be referred to as a base station or a RAN node (or device). Currently, examples of some network devices 101 are: a base station gNB/NR-NB, a transmission reception point (transmission reception point, TRP), an evolved NodeB (evolved NodeB, eNB), a home base station (for example, a home evolved NodeB or a home NodeB, HNB), and a baseband unit (baseband unit, BBU) in NR, a Wi-Fi access point (access point, AP), a satellite device, a network device in a 5G communication system, or a network device in a communication system evolved after 5G. The network device 101 may alternatively be another device that has a network device function. For example, the network device 101 may alternatively

6

be a device that functions as a base station in device-to-device (device to device, D2D) communication, vehicle-to-everything communication, machine-to-machine communication, or uncrewed aerial communication, or a network device (that is, may be deployed on a high-altitude platform, a satellite, or a high-altitude aircraft) in a non-terrestrial network (non-terrestrial network, NTN) communication system. A specific form of the network device 101 may be a macro base station configured to provide a macro cell (macro cell), a micro base station configured to provide a pico cell (pico cell), and a femto base station configured to provide a femto cell (femto cell).

In some deployments, the gNB may include a central unit (central unit, CU) and a distributed unit (distributed unit, DU). The gNB may further include a radio unit (radio unit, RU). The CU implements some functions of the gNB, and the DU implements some functions of the gNB. It may be understood that the network device may be a CU node, a DU node, or a device including a CU node and a DU node. In addition, the CU may be classified as a network device in an access network RAN, or the CU may be classified as a network device in a core network CN. This is not limited herein.

Optionally, the network devices may communicate with each other through a backhaul (backhaul) link. The backhaul link may be a wired backhaul link (for example, an optical fiber or a copper cable), or may be a wireless backhaul link (for example, a microwave).

The terminal device 102 may also be referred to as user equipment (user equipment, UE), a mobile station (mobile station, MS), a mobile terminal (mobile terminal, MT), a wireless terminal, a handheld device, a client, or the like, and is a device that provides voice or data connectivity for a user, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a mobile cellular phone, a cordless phone, a personal digital assistant (personal digital assistant, PDA), customer-premises equipment (customer-premises equipment, CPE), a smart point of sale (point of sale, POS) machine, a wearable device (for example, a smartwatch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control, a smart home device (for example, a refrigerator, a television, an air conditioner, or an electricity meter), an intelligent robot, a workshop device, a wireless terminal in uncrewed driving, a wireless terminal in remote surgery, a wireless terminal in a smart grid (smart grid), a wireless terminal in transportation safety, a wireless terminal in a smart city, a smartphone, a notebook computer, a tablet computer, a wireless data card, a wireless modulator demodulator (modulator demodulator, Modem) or a wireless terminal in a smart home, a flight device (for example, an intelligent robot, a hot air balloon, an uncrewed aerial vehicle, or an airplane), a household appliance, a vehicle, a tool device, a service device, a service facility, and the like. Alternatively, the terminal device may be another device that has a terminal function. For example, the terminal device may alternatively be a device that functions as a terminal in D2D communication. A terminal device having wireless receiving and sending functions and a chip that can be disposed in the terminal device are collectively referred to as the terminal device in this application. The terminal device may communicate with a corresponding base station through a radio link.

The following uses the terminal device and the network device as an example to describe the method provided in embodiments of this application.

For example, the network device in this application may be configured to provide a radio access service for the terminal device. Specifically, each network device corresponds to a service coverage area. A terminal device that enters the area may communicate with the network device by using a radio signal, to receive the radio access service provided by the network device. Service coverage areas of network devices may overlap, and a terminal device in an overlapping area may receive radio signals from a plurality of network devices. Therefore, the plurality of network devices may simultaneously provide services for the terminal device.

With reference to the communication system shown in FIG. 1, the following describes in detail a data transmission method provided in embodiments of this application.

To better understand the solutions provided in embodiments of this application, the following first describes some terms, concepts, or procedures in embodiments of this application.

(1) AI learning

AI technologies can be classified into supervised learning, unsupervised learning, and reinforcement learning based on supervision levels.

The supervised learning resolves known problems and aims to derive a prediction function from labeled training data. The labeled training data means an input and an expected output that are included in each training instance, that is, a mapping relationship between input data and an output result is learned based on the input data and the output result, and the mapping relationship is applied to an unknown input to obtain a correct output.

The unsupervised learning, also referred to as active learning, is a machine learning type used to identify a new pattern and detect an exception, and infer a conclusion from unlabeled training data, that is, training data has no corresponding output result. Most typical unsupervised learning is cluster analysis, which may be used to discover a hidden pattern or group data in an exploratory data analysis stage. In other words, the unsupervised learning is characterized by searching for a hidden structure or feature of given data.

For example, the supervised learning and the unsupervised learning may be separately used to train a model (or may be referred to as an AI model, a machine training model, or the like) based on labeled data or unlabeled data. After the model training is completed, model inference is performed by using unknown candidate data. If overheads are excessively high due to the labeled data in using the supervised learning, an unsupervised learning manner may be used to reduce a quantity of labels and control a size of the training data.

The reinforcement learning, also referred to as reinforcement learning, is another field of machine learning. The reinforcement learning includes three elements: a state (state), an action (action), and a reward (reward). This learning manner focuses on how to take an action in an environment to maximize a specific accumulated return. For example, a current state and a current reward are given to learn how to select a series of actions to maximize a long-term reward.

In the foregoing three learning manners, the supervised learning and the unsupervised learning may be applied to offline learning, that is, learning a model offline based on a large amount of training data, and after the model learning is completed, actual data is used for inference. The reinforcement learning may be applied to online learning, that is, determining, based on the current state and the current reward, an action that can maximize the long-term reward.

For the offline learning, a large amount of training data is required to obtain a model with high accuracy. In wireless communication, training data may be collected by some data collection parties (for example, terminal devices) that are in an energy saving state or have a weak computing capability. The terminal devices obtain a large amount of training data by using various sensors or sensing signals. Considering that model training needs to consume a large quantity of computing resources and energy, to ensure training effect of the model, model training may be performed on another device side with a stronger computing capability, for example, a network device. Therefore, the terminal device needs to report the collected training data to the network device, and the network device trains an AI model by using the received training data.

To ensure training accuracy, the terminal device needs to send a large amount of training data to the network device, resulting in extremely high communication overheads. In addition, with limited transmission resources, a large quantity of transmission requirements also cause an increase in interference and a decrease in a throughput, thereby affecting training effect of the model. In addition, similar problems exist in a sensing service domain. To improve accuracy of determining a sensing result, the terminal device needs to report a large amount of collected sensing data to the network device, resulting in excessively high overheads.

To reduce transmission overheads in the data reporting process, an embodiment of this application provides a communication method. The following describes the communication method provided in embodiments of this application with reference to FIG. 2a. The communication method may be performed by a first apparatus. In this application, the first apparatus may be a device, an apparatus, a chip, or the like configured to collect and/or report data. The data collected by the first apparatus includes training data and/or sensing data, or may be extended to other data that needs to be collected and reported. Optionally, the data collected by the first apparatus may be reported to a second apparatus. The second apparatus may be a device, an apparatus, a chip, or the like configured to analyze and/or process data. The analysis and/or processing process includes performing training based on the training data, or includes determining a sensing result based on the sensing data.

In a possible implementation, the first apparatus may be a terminal device or a component in the terminal device, and the second apparatus may be a network device or a component in the network device. The component in this application may include, for example, at least one of a chip, a chip system, a processor, a transceiver, a processing unit, an interface circuit, or a transceiver unit. This is not specifically required.

In FIG. 2a, an example in which a terminal device is used as an execution body is used to describe the communication method that is provided in embodiments of this application and that may include the following steps.

S101: The terminal device obtains first data.

The first data may include training data and/or sensing data.

In this application, the training data includes data used by a network device to perform AI model training.

In a scenario in which the network device performs AI model training, the training data may include channel data representing a channel between the terminal device and the network device. For example, the channel data may include a plurality of types of channel characteristics (or referred to as channel characteristic parameters). For example, the channel characteristics may include a large-scale parameter, a small-scale parameter, a measurement result, or the like. The training data may further include data of another type other than the channel data. This is not limited in this application.

The large-scale parameter may include at least one type of channel characteristic in a path loss (path loss), shadow fading (shadow fading, SF), a path delay spread (path delay spread), an angular spread (angular spread), a Rician K factor (Rician K factor), a cross polarization power ratio (cross polarization power ratio, XPR), a cluster number (cluster number), a sub-cluster number (sub-cluster number), and a location vector of a transmit/receive antenna (location vector of transmit/receive antenna).

The small-scale parameter may include at least one type of channel characteristic in an azimuth angle of arrival (azimuth angle of arrival, AOA), an azimuth angle of departure (azimuth angle of departure, AOD), a zenith angle of arrival (zenith angle of arrival, ZOA), a zenith angle of departure (zenith angle of departure, ZOD), a cluster delay (cluster delay), cluster power (cluster power), a speed of the terminal device, a travel azimuth angle (travel azimuth angle) of the terminal device, and a travel elevation angle (travel elevation angle) of the terminal device.

The measurement result may include at least one type of channel characteristic in reference signal received power (reference signal received power, RSRP), reference signal received quality (reference signal received quality, RSRQ), a received signal strength indicator (received signal strength indicator, RSSI), a signal to interference plus noise ratio (signal to interference plus noise ratio, SINR), a layer indicator (layer indicator, LI), a channel quality indicator (channel quality indicator, CQI), and a pre-coding matrix indicator (pre-coding matrix indicator, PMI).

It may be understood that, in S101, the first data may include channel data (for example, including all types of channel characteristics, or original channel data used to obtain all types of channel characteristics), or include one or more of the foregoing types of channel characteristics. Optionally, the plurality of types of channel characteristics herein may not include all types of channel characteristics, that is, include some types of channel characteristics.

In addition, the sensing data may include data of a sensing service. In the sensing service, a device like the network device and/or the terminal obtains the sensing data through a sensing operation. The sensing operation may include an operation in a single-device mode and an operation in a multi-device mode. A sensing operation procedure in the single-device mode may include sending a sensing signal and receiving an echo signal, where the echo signal is a reflected signal of an object for the sensing signal. A radio access network device may perform specific processing based on the echo signal, to generate (or determine, obtain, or the like) the sensing data or a sensing result. A sensing operation procedure in the multi-device mode may include sending a sensing signal and receiving a sensing result.

For example, in the sensing service, a sensing network element (for example, a sensing control network element (sensing control function, SCF)) may obtain a sensing requirement based on an internal requirement of a network or a requirement of a demander of the sensing service. After obtaining the sensing requirement, the sensing network element may indicate or control the network device and/or the terminal device to detect and/or collect the sensing data. The network device and/or the terminal device may obtain the sensing data through detection, and provide the sensing data for the sensing network element, so that the sensing network element provides the sensing service based on the sensing data.

For example, the sensing data in this application may include a sensing result of a location, a distance, an angle, or a movement direction of an object in an environment, and a sensing result of an angle, a delay, or fading of a channel between a sensing signal sending device and a receiving device. The sensing results of the location, the distance, the angle, and the movement direction of the object, and the sensing results of the angle, the delay, and the fading of the channel between the sensing signal sending device and the receiving device are different types of sensing data.

S102: The terminal device determines, based on first diversity (diversity) information, whether to send the first data.

The first diversity information is determined based on the first data and a set of second data, and the second data includes historical data sent by the terminal device and/or data indicated by the network device.

Optionally, a type of the first data is the same as a type of the second data. For example, the first data and the second data each are a channel characteristic, for example, RSRP. Alternatively, the first data and the second data include a same type of channel characteristic, for example, each include RSRP and an SINR. In this case, the first data and the second data may be represented in a form of vector or matrix. It may be understood that an example of the channel characteristic herein is merely an example, and may be changed based on an actual requirement, or may be changed to sensing data or the like. This is not specifically limited.

The following separately describes possible ranges of the second data.

(1) The second data includes training data and/or sensing data sent by the terminal device.

If the terminal device has sent the training data and/or the sensing data to the network device at least once before sending the first data, the second data may include the sent training data and/or sensing data. Optionally, the historical data may be periodically sent, or may be aperiodically sent based on a request or scheduling of the network device. This is not specifically required.

If the historical data is a part of sent data that is of a same type as the first data, a quantity of data that needs to be reported by the terminal device can be reduced, and transmission overheads can be reduced. A manner of determining that the part of sent data is the historical data is, for example, the terminal device uses, as the historical data, data that is sent within a specific duration range and that is of the same type as the first data. In addition, the terminal device may further use, as the historical data, data that is within a specific quantity range of sending times and that is of the same type as the first data. The data within the specific quantity range of sending times is, for example, data sent in the latest k times. The duration and/or the quantity of sending times may be indicated by the network device, or may be preconfigured, predefined, defined in a protocol, or determined by the terminal device.

In an optional implementation, the terminal device may maintain a historical data set, and update the historical data set each time after sending the historical data. For example, the terminal device may store historical data sent within specific duration or a specific quantity range of sending times, and the historical data is subsequently used as a comparison sample for determining whether to send new training data and/or sensing data.

(2) The second data includes the data (referred to as sixth data below) indicated by the network device.

The network device may specifically indicate a value and/or a type of the sixth data. In other words, the sixth data may include a value and/or a type of the data indicated by the network device.

It may be understood that, in view of this implementation, the terminal device may further receive indication information from the network device, and the terminal device may determine the sixth data indicated by the network device based on the indication information. Specifically, the indication information may include the value and/or the type of the data.

If the network device indicates the value of the sixth data, the indication information may include a single value and a set of a plurality of values. Each value may include a form like a vector. This is not specifically limited. If the network device indicates the value of the sixth data but does not indicate the type of the sixth data, the terminal device may determine the type of the sixth data based on a predefinition or a definition in a protocol, for example, use a default data type as the type of the sixth data.

Optionally, the network device may determine the sixth data based on historical data reported by one or more terminal devices. For example, the network device may determine the sixth data based on a part or all of the historical data reported by the terminal device, for example, use an average value of the part or all of the historical data as the sixth data, to reduce overheads in indicating the sixth data. Alternatively, a plurality of pieces of historical data reported by the one or more terminal devices are used as the sixth data, to improve accuracy of determining the first diversity information. The sixth data may alternatively be data that is configured by another network element and that is received by the network device.

In addition, if the network device indicates the type of the sixth data, the indication information may include information such as a number or an index of the data type. In this case, the terminal device may send, to the network device, only data of a type expected by the network device, to reduce transmission overheads.

Optionally, if the network device indicates the type of the sixth data, the terminal device may determine, from the historical data and/or the sixth data, data of a type expected by the network device.

In addition, optionally, the network device may further indicate an expected type and value of the sixth data. Therefore, the terminal device may more accurately determine the second data based on an indication of the network device.

In this application, the network device may indicate the value and/or the type of the sixth data to the terminal device by using a radio resource control (radio resource control, RRC) message and/or downlink control information (downlink control information, DCI). In other words, the value and/or the type of the sixth data may be carried in the RRC message or the DCI. Optionally, a manner in which the network device indicates the value and/or the type of the sixth data by using the RRC message may be referred to as determining the value and/or the type of the sixth data based on a preconfiguration.

For example, the network device indicates the value and the type of the sixth data. Both the type and the value of the sixth data may be carried in the RRC message. For another example, the type of the sixth data is carried in the RRC message, and the value of the sixth data is carried in the DCI. Alternatively, the type of the sixth data is carried in the DCI, and the value of the sixth data is carried in the RRC message. Alternatively, both the type and the value of the sixth data may be carried in the DCI.

The following describes diversity information in this application.

In this application, the diversity information is determined based on a degree of correlation between data. A lower degree of correlation between the data indicates higher diversity. Diversity of data may be represented by a diversity value. For example, a value range of the diversity value is 1 to 8, and a larger value indicates higher diversity. It may be understood that the value range of the diversity value herein is merely an example for description, and is not limited to the example in specific implementation. In an example, the terminal device may determine the first diversity information based on relevance (relevance) or a correlation (correlation) between the first data and the second data. Relevance between data may be calculated according to a data relevance formula in the field of statistics, and the relevance formula does not fall within a limited scope of this application. It may be understood that lower relevance between data indicates higher diversity.

Optionally, in S102, the terminal device may determine, based on a value relationship between the first diversity information and a first threshold (or referred to as a diversity threshold), whether to send the first data. For example, when the first diversity information is not less than (or greater than) the first threshold, the terminal device determines to send the first data. On the contrary, if the first diversity information is less than (or not greater than) the first threshold, the terminal device determines not to send the first data, to reduce transmission overheads. A value of the first threshold may be indicated by the network device, or may be preconfigured, predefined, or defined in a protocol.

Therefore, in this application, the terminal device may determine, based on first diversity information of to-be-reported data, whether to report training data to the network device, and does not need to report all of the to-be-reported data. This can reduce transmission overheads of the training data.

In a possible implementation of S 102, the first diversity information may be determined based on difference information between the first data and the second data (which may be referred to as difference information for short below). A type of the difference information may be at least one of a value difference, a distance difference, an amplitude difference, or a phase difference between data. The following describes a method for determining each type of difference information with reference to a manner of determining the difference information.

Optionally, the network device may indicate, to the terminal device by using the first indication information, that the difference information is specifically one or more of the value difference, the distance difference, the amplitude difference, and the phase difference. In other words, the first indication information may indicate a type of the difference information. Alternatively, it may be determined, through preconfiguration, predefinition, or definition in a protocol, that the difference information is specifically one or more of the value difference, the distance difference, the amplitude difference, and the phase difference.

In a possible implementation, a correspondence, a function relationship, or an operation relationship is met between the first diversity information and the difference information. Therefore, the terminal device may further determine the first diversity information based on the difference information. For example, the correspondence between the first diversity information and the difference information is met. The terminal device may determine the first diversity information based on the difference information and a first correspondence. The first correspondence includes the correspondence between the difference information and the first diversity information.

It may be understood that, in this application, if the terminal device determines the difference information in different manners, first diversity information separately determined based on difference information obtained in different manners may be different. Correspondingly, results of determining, based on the first diversity information, whether to send the first data may be different. In addition, if the terminal device determines a plurality of different types of difference information based on the first data and the second data, values of the plurality of different types of difference information may be different. In addition, first diversity information separately determined based on the plurality of different types of difference information may be different, for example, applicable first correspondences may be different. Correspondingly, results of determining, based on the first diversity information, whether to send the first data may be different, for example, applicable diversity thresholds (which may be referred to as first thresholds) may be different.

The following describes, by using examples of Manner 1 to Manner 3, a manner in which the terminal device determines the first diversity information based on the difference information.

Manner 1: Determine the first diversity information based on the difference information, where the first diversity information is determined based on a difference between the first data and each piece of second data in the set of second data.

For ease of description below, a set of parameters used to describe the difference between the first data and each piece of second data in the set of second data is referred to as a set of first parameters. Each first parameter includes a difference between the first data and one or more pieces of second data. In other words, in Manner 1, the difference information includes the first parameter (or the set of first parameters).

If the first parameter includes a difference between the first data and one piece of second data, the first parameter is, for example, a difference value between the first data and the one piece of second data. It may be understood that, if each first parameter is a difference between the first data and one piece of second data, a quantity of first parameters is the same as a quantity of second data. In addition, if the first parameter includes a difference between the first data and a plurality of pieces of second data, an average value of the plurality of pieces of second data may be first calculated, or one piece of second data is selected from the plurality of pieces of second data, and then a difference between the first data, and the average value or the selected piece of second data is determined. Therefore, a difference between the first data and all the second data does not need to be determined, so that data processing difficulty can be reduced.

Optionally, in view of the descriptions of the type of the difference information, a difference type of the first parameter may include at least one of the value difference, the distance difference, the amplitude difference, and the phase difference. It may be understood that manners of determining first parameters of different type differences (or referred to as difference types) are different. Optionally, the difference type of the first parameter is the type of the difference information. For example, the network device may indicate the type of the difference information by using the first indication information, and the terminal device uses the type as the difference type of the first parameter.

The following separately describes manners of determining the first parameter for different difference types.

For example, the difference type is the distance difference. The first parameter $d_j$ between the first data and the second data satisfies Formula 1 or Formula 2:

$$d_j = \frac{\|x - y_j\|}{\sigma}, \ y_j \in \Omega \ \text{(Formula 1)}$$

$$d_j = e^{-\frac{\|x-y_j\|}{\sigma}}, \ y_j \in \Omega \ \text{(Formula 2)}$$

In this application, $x$ indicates the first data, $y_j$ indicates a $j^{th}$ piece of second data. Therefore, $d_j$ indicates a distance difference between the first data and the $j^{th}$ piece of second data, where $j = 1, 2, \ldots, K$, $K$ is the quantity of second data, K is a positive integer, $\sigma$ is a constant, $\Omega$ indicates the set of second data, and $e$ indicates an Euler's constant. $\|f\|$ indicates a norm of f. Optionally, $\sigma$ may be determined based on a sample dimension. For example, the sample dimension is the quantity of second data. For example, if a value of the sample dimension is 10, a value of $\sigma$ may be 10, or may be another value.

According to Formula 1 and Formula 2, a value range of $d_j$ is 0 to 1.

It may be understood that Formula 1 and Formula 2 may be considered as a manner of determining the distance difference.

For another example, if the difference type is the phase difference, the phase difference $d_j$ between the first data and the second data satisfies Formula 3:

$$d_j = \left(\frac{\pi}{2} - \cos^{-1}\frac{\langle x, y_j \rangle}{\|x\|\|y_j\|}\right)/\frac{\pi}{2}, \ y_j \in \Omega \ \text{(Formula 3)}$$

In this application, $\cos^{-1}()$ indicates an arc cosine function, and $\langle a, b \rangle$ indicates an inner product of a and b.

According to Formula 3, a value range of $d_j$ is 0 to $\frac{\pi}{2}$.

In addition, if the difference information is the value difference, when both the first data and the second data are single data, the first parameter may be a difference between the first data and the second data or an absolute value of the difference.

If the difference information is the amplitude difference, the first parameter may be a difference between amplitudes of the first data and the second data or an absolute value of the difference.

In a possible implementation of Manner 1, the first parameter may further include the difference between the first data and the plurality of pieces of second data. For example, the quantity of second data is R, and R is a positive integer. To further reduce data transmission and processing overheads, r pieces of updated second data may be determined based on R pieces of second data, and then $d_j$ is determined in any one of Formula 1 to Formula 3, where r is a positive integer less than R. Optionally, a manner of determining the r pieces of updated second data may be: grouping the R pieces of second data into r groups, performing averaging processing on each group of second data, and using results of averaging processing as the r pieces of updated second data. Alternatively, the r pieces of updated second data may be determined from the R pieces of second data in a random selection manner or in descending order or ascending order.

For example, based on Manner 1, the terminal device may determine the first diversity information based on the first correspondence, where the first correspondence may include a correspondence between the first parameter and the first diversity information.

The first parameter $d_j$ determined according to Formula 1 or Formula 2 is used as an example. As shown in Table 1-1, the first correspondence may include a correspondence between a value of the first parameter and a value of the diversity information.

Table 1-1

| First parameter $d_j$ | First diversity information |
|---|---|
| $d_j < 5\%$ | 1 |
| $5\% \leq d_j < 10\%$ | 2 |
| $10\% \leq d_j < 15\%$ | 3 |
| $15\% \leq d_j < 20\%$ | 4 |
| $20\% \leq d_j < 25\%$ | 5 |
| $25\% \leq d_j < 35\%$ | 6 |
| $35\% \leq d_j < 50\%$ | 7 |
| $d_j \geq 50\%$ | 8 |

It may be understood that first parameters of different difference types may be respectively applicable to different first correspondences. For example, the correspondence shown in Table 1-1 is applicable to the first parameter whose type is the distance difference determined according to Formula 1. For a case in which the first parameter is the distance difference determined according to another formula, or the first parameter is the value difference, the amplitude difference, the phase difference, or the like, first correspondences to which first parameters of these types are applicable may be selected additionally.

For another example, the first parameter is a value difference of a measurement result like RSRP or an SINR, and the correspondence between the first parameter and the first diversity information is shown in Table 1-2.

Table 1-2

| Value difference $d$ | First diversity information |
|---|---|
| $d<-20$ dB | 1 |
| $-20$ dB$\leq d<-10$ dB | 2 |
| $-10$ dB$\leq d<-5$ dB | 3 |
| $-5$ dB$\leq d<0$ dB | 4 |
| $0$ dB$\leq d<10$ dB | 5 |
| $10$ dB$\leq d<15$ dB | 6 |
| $15$ dB$\leq d<20$ dB | 7 |
| $d\geq 20$ dB | 8 |

For another example, the first parameter is a value difference of a channel characteristic like an AOA or an AOD, and the correspondence between the first parameter and the first diversity information is shown in Table 1-3.

Table 1-3

| Value difference $d$ | First diversity information |
|---|---|
| $d<1$ degree (°) | 1 |
| $1°\leq d<2°$ | 2 |
| $2°\leq d<5°$ | 3 |
| $5°\leq d<8°$ | 4 |
| $8°\leq d<10°$ | 5 |
| $10°\leq d<15°$ | 6 |
| $15°\leq d<20°$ | 7 |
| $d\geq 20°$ | 8 |

It may be understood that the table in this application is merely used as an example for description of the correspondence, and a specific value and/or information in the table may be flexibly adjusted based on an actual application requirement.

In addition, it may be further understood that, in this application, in addition to determining the first diversity information by searching for the first correspondence, the terminal device may alternatively determine, based on the first parameter $d_j$, the first diversity information based on a function relationship and/or in a specific operation manner. The specific function relationship and/or operation manner between the first parameter $d_j$ and the first diversity information are/is not limited in this application. For example, the first parameter $d_j$ and the first diversity information may satisfy a piecewise function, a value of a horizontal coordinate of the piecewise function is $d_j$, a value of a vertical coordinate is the first diversity information, and the horizontal coordinate and the vertical coordinate may satisfy any one of Table 1-1 to Table 1-3. Alternatively, a value of the first parameter $d_j$ and a value of the first diversity information may satisfy a linear function or the like. This is not specifically limited.

In Manner 1, the set of first parameters may include one or more first parameters. Therefore, correspondingly, the terminal device may determine, based on the first correspondence, one or more pieces of first diversity information corresponding to the first parameter, which are referred to as a set of first diversity information. Correspondingly, in a process of determining, based on the first diversity information determined in Manner 1, whether to send the first data, the terminal device may compare values of the one or more pieces of first diversity information in the set of first diversity information with a value of the first threshold, and determine, based on a comparison result, whether to send the first data.

In a possible implementation, because $d_j$ indicates the difference information between the first data and each piece of second data, when there are a plurality of pieces of second data, the first diversity information determined by the terminal device in Manner 1 may include a plurality of values, which are denoted as $D_j$. When all values of $D_j$ are greater than (or not less than) the diversity threshold, the terminal device may determine to send the first data. Otherwise, when at least one value of $D_j$ is less than (or not greater than) the diversity threshold, the terminal device may determine not to send the first data. Optionally, for different values of $D_j$, diversity thresholds may be the same or may be different. To be specific, different diversity thresholds may be used for each piece of first diversity information $D_j$, or a same diversity threshold may be used for all first diversity information $D_j$.

In another possible implementation, the terminal device may determine an average value of $D_j$, and compare the average value with the value of the first threshold. When the average value of $D_j$ is greater than (or not less than) the diversity threshold, the terminal device may determine to send the first data. Otherwise, when the average value of $D_j$ is less than (or not greater than) the diversity threshold, the terminal device may determine not to send the first data. Optionally, the average value of $D_j$ may be replaced with a largest value, a smallest value, a random value, $D_j$ closest to the average value, or the like in $D_j$. This is not specifically limited.

In another possible implementation, whether to send the first data may alternatively be determined based on a proportion of a quantity of first diversity information $D_j$ whose value is greater than the diversity threshold to a quantity of all first diversity information. For example, when the proportion of $D_j$ whose value is greater than the diversity threshold to all $D_j$ is greater than (or not less than) a proportion threshold (for example, 70%), the terminal device may determine to send the first data; otherwise, when a proportion of $D_j$ whose value is less than (or not greater than) the diversity threshold to all $D_j$ is greater than the proportion threshold, the terminal device may determine not to send the first data. For example, the quantity of second data is $K = 100$, a quantity of data that is in the first diversity information $D_j$ corresponding to the first data and whose value is greater than the diversity threshold $T_d$ is 80. If the proportion threshold $R_d$ is 70%, the terminal device reports the first data to the network device. Optionally, for different values of $D_j$, diversity thresholds may be the same or may be different. To be specific, different diversity thresholds may be used for each piece of first diversity information $D_j$, or a same diversity threshold may be used for all the first diversity information $D_j$.

Optionally, in Manner 1, the first indication information may specifically indicate a correspondence between the first data and at least one of a correspondence number, the difference type, and the diversity threshold. For ease of description, the correspondence between the first data and the at least one of the correspondence number, the difference type, and the diversity threshold may be referred to as a diversity information configuration. The correspondence numbers may be used to distinguish between different first correspondences. For example, the diversity information configuration may include a correspondence between the first data and the correspondence number, the difference type, and the diversity threshold. The correspondence number indicates the correspondence between the first parameter and the first diversity information. For Manner 1, the correspondence is the first correspondence. Therefore, the network device may indicate, for different first data, the first correspondence, the difference type, and the diversity threshold that the first diversity information meets. In addition, the diversity information configuration may alternatively be determined through preconfiguration, predefinition, definition in a protocol, or the like.

In addition, the network device may alternatively indicate the correspondence between the first data and the at least one of the correspondence number and the diversity threshold by using a message other than the first indication information. For example, the network device indicates, by using the first indication information, the data type corresponding to the first data, and indicates the correspondence between the first data and the at least one of the correspondence number and the diversity threshold by using other indication information.

Further, optionally, the diversity information configuration may be a configuration for data, or may be a configuration for the terminal device, or may be a configuration applicable to data and/or the terminal device in a period of time. This is not specifically required in this application.

As shown in Table 2, the training data and/or the sensing data may be grouped to obtain a data group 1 to a data group N, and a diversity information configuration is determined for each group.

Table 2

| Diversity information configuration | | | |
|---|---|---|---|
| Data group | Correspondence number | Diversity threshold | Difference type |
| 1 | 1 | 4 | Distance difference |
| 2 | 2 | 5 | Value difference |
| 3 | 3 | 3 | Distance difference |

(continued)

| Diversity information configuration | | | |
|---|---|---|---|
| Data group | Correspondence number | Diversity threshold | Difference type |
| ... | ... | ... | ... |
| N | N | 6 | Phase difference |

Based on Table 2, the network device may indicate, by using the first indication information, a data group to which the first data belongs. Therefore, the terminal device may indicate, based on Table 2 and the group to which the first data belongs, to determine a correspondence number corresponding to the first data, a manner of determining the difference information, and the diversity threshold.

It may be understood that different correspondence numbers in Table 2 may indicate different correspondences. The correspondence includes the correspondence between the first parameter $d_{ij}$ and the first diversity information.

For example, a correspondence of the number 1 may include the correspondence shown in Table 1-1, and correspondences of the number 2 to number N may be the same as or different from the correspondence of the number 1. For example, the correspondences of the number 2 to number N may include the correspondence shown in Table 1-2 or Table 1-3. For example, the correspondence of the number 3 may include the correspondence shown in Table 3. This is not specifically limited.

Table 3

| First parameter $d_{ij}$ | First diversity information |
|---|---|
| $d_{ij}<10\%$ | 1 |
| $10\%\leq d_{ij}<20\%$ | 2 |
| $20\%\leq d_{ij}<30\%$ | 3 |
| $30\%\leq d_{ij}<40\%$ | 4 |
| $40\%\leq d_{ij}<50\%$ | 5 |
| $50\%\leq d_{ij}<60\%$ | 6 |
| $60\%\leq d_{ij}<70\%$ | 7 |
| $d_{ij}\geq 70\%$ | 8 |

It may be understood that the values/information in Table 1-1 to Table 3 are merely examples, and are not used as a limitation on the foregoing tables. The values/information in the foregoing tables may be changed based on an actual requirement.

Optionally, in this application, the network device may indicate or reconfigure the diversity information configuration based on training effect of a model. For example, if the network device receives, within observation duration, no training sample reported by the terminal device, or the network device receives a small quantity (or a low proportion) of training data, it means that a diversity value of the training data of the terminal device within the observation duration is always or mostly lower than the diversity threshold. In a model training process, an excessively small amount of training data may also reduce the training effect of the model. Therefore, in this case, the network device may reconfigure a diversity-related parameter, to increase a quantity of times of reporting the training data and/or a quantity of training data reported by the terminal device, so as to improve model training accuracy. In addition, when a loss function value of the AI model is large or a reward function value is small, it indicates that diversity of a current training sample is low. The network device may also reconfigure the diversity-related parameter, for example, indicate to increase the diversity threshold, to decrease the quantity of times of reporting the training data and/or the quantity of training data reported by the terminal device.

Manner 2: Determine the first diversity information based on the difference information, where the difference information includes average information of differences between the first data and a plurality of pieces of second data, or difference information between the first data and an average value of the plurality of pieces of second data.

The average information of the differences may be an average value of difference information between the first data and the plurality of pieces of second data. To be specific, a difference value between the first data and each piece of second data is first obtained, and then an average value of a plurality of difference values is obtained. The difference information of the average value may be the difference information between the first data and average data of the plurality of pieces of second data. To be specific, the average value of the plurality of pieces of second data is first obtained, and then a difference between the first data and the average value is obtained. For ease of description, the average information of the differences is referred to as a second parameter in the following, and the average information of the differences and the second parameter may be replaced with each other. The difference information of the average value is referred to as a third parameter, and the difference information of the average value and the third parameter may be replaced with each other.

The following separately describes, by using different cases, manners of determining the second parameter and the third parameter by the terminal device.

Case 1: The terminal device determines the second parameter.

For example, the manner of determining the second parameter by the terminal device may be: first obtaining the set of first parameters, and then determining an average value based on the first parameters in the set of first parameters, where the average value is the second parameter.

For example, the terminal device may determine the first parameter $d_j$ based on the descriptions in Manner 1, and then determine the second parameter $d$ based on the first parameter $d_j$. Optionally, $d$ satisfies:

$$d = \frac{\sum_j d_j}{K} \ \text{(Formula 4)}$$

In this application, $K$ is a quantity of second data, or $K$ is a quantity of first parameters.

It may be understood that, as described in Manner 1, the first parameter $d_j$ may include one or more of the value difference, the distance difference, the amplitude difference, and the phase difference. Therefore, the second parameter may include one or more types of an average of value differences, an average of distance differences, an average of amplitude differences, and an average of phase differences.

In a possible implementation, with reference to the descriptions in Manner 1, the network device may indicate the diversity information configuration to the terminal device by using the first indication information, or the terminal device may determine the diversity information configuration through preconfiguration, predefinition, or definition in a protocol. The diversity information configuration may include a difference type. For Case 1, the difference type is a difference type of the second parameter. For example, if the first indication information indicates the distance difference, correspondingly, the second parameter is an average of distance differences between the first data and the second data.

Optionally, based on Case 1, the terminal device may further determine the first diversity information based on the second parameter. As described in this application, the first diversity information and the second parameter may meet the first correspondence.

In a possible implementation, a correspondence number indicated by the first indication information may be used to determine the first correspondence to which the second parameter is applicable.

In addition, after determining the first diversity information based on the second parameter, the terminal device may further determine, based on the first diversity information and the diversity threshold, whether to send the first parameter.

For example, the first correspondence d between different values of the second parameter and a value of the first diversity information is shown in Table 4.

Table 4

| Second parameter $d$ | First diversity information |
| --- | --- |
| $d<5\%$ | 1 |
| $5\% \leq d < 10\%$ | 2 |
| $10\% \leq d < 15\%$ | 3 |
| $15\% \leq d < 20\%$ | 4 |
| $20\% \leq d < 25\%$ | 5 |
| $25\% \leq d < 35\%$ | 6 |
| $35\% \leq d < 50\%$ | 7 |
| $d \geq 50\%$ | 8 |

It may be understood that different types of second parameters may correspond to different first correspondences. The network device may indicate, by using the first indication information, the first correspondence to which the second parameter is applicable. For example, the network device may indicate, from a plurality of first correspondences based on the correspondence number, the first correspondence to which the second parameter is applicable.

For example, the correspondence shown in Table 4 may be a first correspondence to which a second parameter whose type is the distance difference is applicable. First correspondences to which second parameters of types such as the value difference, the amplitude difference, and the phase difference are applicable may be additionally set.

It may be further understood that the values in Table 4 are merely examples, and are not used as a limitation on the first correspondence. The value of the second parameter and/or the value of the first diversity information may be changed based on an actual requirement.

In addition, it may be further understood that, in addition to determining the first diversity information by searching for the first correspondence, the terminal device may alternatively determine, based on the second parameter, the first diversity information based on a function relationship or an operation manner. The specific function relationship and/or operation manner that are/is met by the second parameter and the first diversity information are/is not limited in this application. For example, the function relationship between the second parameter and the first diversity information may be a piecewise function, a linear function, or the like. This is not specifically limited.

Case 2: The terminal device determines the third parameter.

For example, a manner of determining the third parameter by the terminal device is as follows: The terminal device first determines average data of the plurality of pieces of second data in the set of second data, and then determines a difference between the first data and the average data. The difference is the third parameter.

For example, the average data $y_j'$ of the plurality of pieces of second data satisfies:

$$y_j' = \frac{\Sigma_j y_j}{K}, \ y_j \in \Omega \ \text{(Formula 5)}$$

Optionally, the average data $y_j'$ may alternatively be replaced with any second data in the set of second data, for example, second data that is in the set and whose value is the largest, the smallest, the median, or closest to a value of the average data, or may be random second data. This is not specifically required in this application.

In addition, with reference to the descriptions of the difference information in Manner 1, the third parameter may include at least one type of the value difference, the distance difference, the amplitude difference, and the phase difference. Similar to Manner 1 and Case 2, the network device may indicate a difference type of the third parameter to the terminal device by using the first indication information. The difference type may determine a manner of determining the third parameter.

For example, the difference type is the distance difference. The third parameter $d$ and the average data $y_j'$ satisfy:

$$d = e^{-\frac{\|x - y_j'\|}{\sigma}} \ \text{(Formula 6)}$$

In this application, $y_j'$ indicates the average data.

In other words, a difference $d$ (namely, the third parameter) between the first data $x$ and the second data $y_j$ satisfies:

$$d = e^{-\frac{\left\|x - \frac{\Sigma_j y_j}{K}\right\|}{\sigma}} \ \text{(Formula 7)}$$

It may be understood that Formula 6 and Formula 7 are merely examples of formulas that the third parameter satisfies when the type is the distance difference. When the type is another type or the distance difference, the third parameter may satisfy another formula. This is not specifically limited.

Optionally, based on Case 2, the terminal device may further determine the first diversity information based on the third parameter. As described in this application, the first diversity information and the third parameter may meet the first correspondence.

In addition, in this application, the network device may further indicate, to the terminal device by using the first indication information, at least one of a correspondence number to which the third parameter is applicable and the diversity threshold, or the terminal device may determine, through preconfiguration, predefinition, or definition in a protocol, at least one of the correspondence number to which the third parameter is applicable and the diversity threshold. The correspondence number may be used to determine the first correspondence to which the third parameter is applicable. In addition, after determining the first diversity information based on the third parameter, the terminal device may further determine, based on the first diversity information and the diversity threshold, whether to send the first parameter.

For example, a correspondence between different values of the third parameter and a value of the first diversity information is shown in Table 5.

Table 5

| Third parameter $d$ | First diversity information |
|---|---|
| $d<5\%$ | 1 |
| $5\%\leq d<10\%$ | 2 |
| $10\%\leq d<15\%$ | 3 |
| $15\%\leq d<20\%$ | 4 |
| $20\%\leq d<25\%$ | 5 |
| $25\%\leq d<35\%$ | 6 |
| $35\%\leq d<50\%$ | 7 |
| $d\geq50\%$ | 8 |

It may be understood that different types of third parameters may correspond to different first correspondences. For example, the network device may further indicate, by using the first indication information, the first correspondence to which the third parameter is applicable. For example, the network device may indicate, from a plurality of first correspondences based on the correspondence number, the first correspondence to which the third parameter is applicable.

For example, the correspondence shown in Table 5 may be a first correspondence to which a third parameter whose type is the distance difference is applicable. First correspondences to which third parameters of types such as the value difference, the amplitude difference, and the phase difference are applicable may be additionally set.

It may be further understood that the values in Table 5 are merely examples, and are not used as a limitation on the first correspondence. The value of the third parameter and/or the value of the first diversity information may be changed based on an actual requirement.

In addition, it may be further understood that, in addition to determining the first diversity information by searching for the third correspondence, the terminal device may alternatively determine, based on the third parameter, the first diversity information based on a function relationship and/or in an operation manner. The specific function relationship and/or operation manner that are/is met by the third parameter and the first diversity information are/is not limited in this application. For example, the function relationship between the third parameter and the first diversity information may be a piecewise function, a linear function, or the like. This is not specifically limited.

It may be understood that, in this application, when the second data is distributed in a centralized manner, for example, values of the second data are centralized in an interval, Case 2 may be used. To be specific, the average value of the second data is first calculated and used as the third parameter, and then the first diversity information is determined by using the third parameter. Because a difference needs to be calculated only once, calculation complexity of the system can be reduced.

However, when the second data is loosely distributed, for example, values of the second data are in a plurality of intervals, difference values obtained by using a difference function, for example, a normalization operation of the distance difference, the phase difference, the amplitude difference, and the like, may be centralized in an interval. In this case, Case 1 may be used. To be specific, the second parameter is first obtained, and then the first diversity information is determined by using the second parameter, to obtain difference information that has a unified unit or range and that can be compared.

In addition, optionally, the terminal device may alternatively determine, based on an indication of the network device, or based on a configuration, or through predefinition or definition in a protocol, to determine the first diversity information in Manner 1 or Manner 2. The indication of the network device is used as an example. The network device may indicate, by using the first indication information (or other information or signaling), the terminal device to determine, in one of Manner 1, Case 1 in Manner 2, or Case 2 in Manner 2, the first diversity information corresponding to the first data.

Manner 3: Determine the first diversity information based on the difference information, where the first diversity information is further determined based on third data.

In Manner 3, the first diversity information may be determined based on second diversity information and third diversity information. The second diversity information may be determined based on the first data and the set of second data with reference to the manner of determining the first diversity information in Manner 1 or Manner 2. The third diversity information may be determined based on a set of third data and a set of fourth data with reference to the manner of determining the first diversity information in Manner 1 or Manner 2.

The third data may include training data and/or sensing data. For example, the first data and the third data may be data collected at different moments, or the first data and the third data may be data of different types, or the first data and the third data are different channel characteristics. This is not specifically required. For example, the first data and the third data are respectively training data and sensing data. For another example, the first data and the third data are respectively different types of channel characteristic parameters. Based on Manner 3, when storing a plurality of pieces of to-be-reported data, the terminal device may determine the first diversity information based on the plurality of pieces of to-be-reported data, to determine whether to report one or more pieces of the plurality of pieces of to-be-reported data.

The fourth data may include historical data sent by the terminal device and/or data indicated by the second apparatus. Optionally, a type of the third data is the same as a type of the fourth data. For example, the third data and the fourth data each are a channel characteristic, for example, RSRP. Alternatively, the third data and the fourth data include a same type of channel characteristic, for example, each include RSRP and an SINR. In this case, the third data and the fourth data may be represented in a form of vector or matrix. It may be understood that an example of the channel characteristic herein is merely an example, and may be changed based on an actual requirement, or may be changed to sensing data or the like. This is not specifically limited.

For example, refer to Manner 1. The second diversity information may be determined based on difference information between the first data and the second data. For example, the terminal device may determine a first parameter between the first data and each piece of second data in the manner shown in Manner 1, and determine, with reference to the first correspondences shown in Table 1-1 to Table 1-3 or Table 3, the second diversity information corresponding to the first parameter. Alternatively, refer to Manner 2. The second diversity information may be determined based on a second parameter or a third parameter between the first data and a plurality of pieces of second data. Table 4 is used as an example. The terminal device may determine the second parameter, and determine, based on the first correspondence shown in Table 4, the second diversity information corresponding to the second parameter. Therefore, in other words, the second diversity information is the first diversity information determined in Manner 1 or Manner 2. Optionally, the terminal device may use a same first correspondence or different first correspondences to separately determine the first diversity information and the second diversity information based on the first parameter. This is not specifically limited.

In addition, refer to Manner 1. The third diversity information may be determined based on difference information between the third data and each piece of fourth data. For example, the terminal device may use the solution shown in Manner 1, use the third data as the first data shown in Manner 1, determine the first parameter between the third data and each piece of fourth data, and determine, with reference to the first correspondences shown in Table 1-1 to Table 1-3 or Table 3, the third diversity information corresponding to the first parameter. In addition, with reference to Manner 2, the third diversity information may be determined based on a second parameter or a third parameter between the third data and a plurality of pieces of fourth data. Table 4 is used as an example. The terminal device may use the third data as the first data shown in Manner 2, determine the second parameter, and determine, based on the first correspondence shown in Table 4, the third diversity information corresponding to the second parameter. Optionally, the terminal device may use a same first correspondence or different first correspondences to separately determine the first diversity information and the third diversity information based on the first parameter. This is not specifically limited.

Further, optionally, the terminal device may determine the first diversity information based on the second diversity information, a second threshold corresponding to the second diversity information, the third diversity information, and a third threshold corresponding to the third diversity information. Optionally, the terminal device may determine the first diversity information based on a value relationship between the second diversity information and the second threshold and a value relationship between the third diversity information and the third threshold.

The second threshold may be determined based on a diversity threshold corresponding to the second diversity information. For example, a value of the second threshold is the same as the diversity threshold, or has a correspondence or a function relationship, or the like with the diversity threshold. Optionally, refer to the descriptions of Table 2. The second threshold corresponds to the first correspondence used to determine the second diversity information. For example, when the terminal device determines, based on the first correspondence, the second diversity information corresponding to the difference information, the second threshold is a diversity threshold corresponding to the first correspondence. Similarly, the third threshold may be determined based on a diversity threshold corresponding to the third diversity information. For example, a value of the third threshold is the same as the diversity threshold, or has a correspondence, a function relationship, or the like with the diversity threshold. This is not specifically required. Optionally, the third threshold corresponds to the first correspondence used to determine the third diversity information.

In a possible implementation, the terminal device may further determine, based on a diversity information set, whether to send the first data. For example, the diversity information set includes the second diversity information and the third diversity information. When each diversity information included in the diversity information set is greater than (or not less than) the diversity threshold, the terminal device may determine to send the first data. Otherwise, when at least one piece of diversity information included in the diversity information set is not greater than (or less than) a diversity threshold, the terminal device may determine not to send the first data. The diversity thresholds may be the same or may be different. To be specific, a different diversity threshold may be used for each piece of diversity information, or a same diversity threshold may be used for all the diversity information. This example may also be understood as that the first diversity information includes the diversity information set.

In another possible implementation, the terminal device may further determine, based on an average value, a largest value, a smallest value, or a random value of diversity information included in a diversity information set, whether to send the first data. For example, the diversity information set includes the second diversity information and the third diversity information. When the average value, the largest value, the smallest value, or the random value of all the diversity information included in the diversity information set is greater than (or not less than) the diversity threshold, the terminal device may determine to send the first data. Otherwise, when the average value, the largest value, the smallest value, or the random value of all the diversity information included in the diversity information set is not greater than (or less than) the diversity threshold, the terminal device may determine not to send the first data. This example may also be understood as that the first diversity information includes the average value, the largest value, the smallest value, or the random value of the diversity information included in the diversity information set.

In addition, the terminal device may further determine, based on a proportion (which may be referred to as a first proportion) of diversity information that is in the diversity information set and whose value is greater than (or not less than) a threshold, whether to send the first data, or determine the first diversity information based on the first proportion, and determine, based on the first diversity information, whether to send the first data. For example, the value of the first diversity information is the first proportion. Correspondingly, the diversity threshold corresponding to the first diversity information is a proportion threshold. Alternatively, the first proportion may be used to determine the first diversity information, and the first diversity information is determined based on a second correspondence between the first proportion and the first diversity information. The threshold herein includes the second threshold and the third threshold. Correspondingly, the diversity information set may include the second diversity information and the third diversity information.

It may be understood that, in this application, the terminal device may further determine the first diversity information based on more data other than the third data, for example, the fourth data and fifth data. Correspondingly, the fourth data, the fifth data, and the like may correspond to respective diversity information, for example, respectively referred to as fourth diversity information and fifth diversity information. The fourth diversity information and the fifth diversity information correspond to respective thresholds, for example, respectively referred to as a fourth threshold and a fifth threshold. If the terminal device alternatively determines the first diversity information based on the third data, the fourth data, and the fifth data, the terminal device may determine, based on a first proportion of diversity information whose value is greater than (or not less than) a threshold, whether to send the first data. The threshold may include the second threshold, the third threshold, the fifth threshold, and the fourth threshold, and the diversity information may include the second diversity information, the third diversity information, the fourth diversity information, and the fifth diversity information.

For example, to-be-transmitted data obtained by the terminal device includes N channel characteristics. When determining whether one or more channel characteristics or channel data including one or more channel characteristics needs to be reported, the terminal device uses the channel characteristic as the first data, and uses the other N-1 channel characteristics as the third data, the fourth data, the fifth data, ..., and the like. Further, the terminal device may determine to denote respective diversity information of the N channel characteristics as $D_i$, i=1, 2, ..., N. For a manner of determining $D_i$ by the terminal device, refer to the descriptions of determining the second diversity information and/or the third diversity information. Assuming that for different data, diversity thresholds are the same, and are denoted as $T_d$, the terminal device may determine whether $D$ corresponding to each piece of channel data is greater than (or not less than) $T_d$, and determine a proportion of diversity information $D'$ whose value is greater than (or not less than) the threshold $T_d$ (or not greater than the threshold), that is, determine the first proportion. The first proportion may be used to determine the first diversity information. For example, the first proportion corresponds to the first diversity information. It may be understood that thresholds corresponding to different data or diversity information may also have different values. This is not specifically limited.

For example, the second correspondence between the first proportion $k$ and the first diversity information is shown in Table 6.

Table 6

| First proportion $k$ | First diversity information |
|---|---|
| $k<5\%$ | 1 |
| $5\%\leq k<10\%$ | 2 |
| $10\%\leq k<15\%$ | 3 |
| $15\%\leq k<20\%$ | 4 |
| $20\%\leq k<30\%$ | 5 |
| $30\%\leq k<40\%$ | 6 |
| $40\%\leq k<60\%$ | 7 |

(continued)

| First proportion $k$ | First diversity information |
|---|---|
| $k \geq 60\%$ | 8 |

It can be learned that when the first proportion is greater than 60%, the value of the first diversity information is 8, indicating that a difference between data is the largest. In addition, the terminal device may alternatively determine the first diversity information based on the first proportion through calculation, for example, obtain the first diversity information by using a specific function and/or an operation manner.

It may be understood that the values in Table 6 are merely examples, and are not used as a limitation for description. Values of the first proportion and/or the first diversity information may be changed based on an actual requirement.

In an example of determining whether to send the first data in Manner 3, after determining the first diversity information based on the first proportion, the terminal device may determine, based on the first diversity information and the first threshold, whether to send the first data. The diversity threshold may correspond to the manner of determining the first diversity information. It may be understood that the first threshold may be the same as or different from the diversity threshold used to determine the first proportion. This is not specifically limited.

In a possible implementation, in another manner of determining whether to send the first data, the terminal device may compare the first proportion with the proportion threshold. For example, if the proportion threshold is 30%, when the terminal device determines that the first proportion is greater than or not less than 30%, the terminal device may determine to send the first data. It may be understood that, in this manner, the first proportion may be considered as the first diversity information.

In still another possible implementation, in a process of determining the first proportion, the diversity information set may include diversity information corresponding to a specific type of data. For example, the specific type may include a large-scale parameter, a small-scale parameter, or a measurement result. In this case, the terminal device may determine, based on the foregoing types of data, a first proportion of diversity information that is in at least one type and whose value is greater than (or not less than) a threshold, and then determine the first diversity information based on the first proportion, or determine whether to send the first data based on the first proportion. For example, a correspondence that is between the first proportion and the first diversity information and that is determined based on the data type is shown in Table 7.

For example, it is assumed that diversity thresholds of both the small-scale parameter and the large-scale parameter are $T_d$. In the small-scale parameter, diversity information of different channel characteristics is denoted as $D_1$. In $D_1$, a proportion of a quantity of characteristics whose diversity information has values greater than the diversity threshold $T_d$ to a quantity of all small-scale characteristics is denoted as R1, and R1 is a first proportion corresponding to the small-scale parameter. In the large-scale parameter, diversity information of different channel characteristics is denoted as $D_2$. In $D_2$, a proportion of a quantity of characteristics whose diversity information has values greater than the diversity threshold $T_d$ to a quantity of all large-scale characteristics is denoted as R2, and R2 is a first proportion corresponding to the large-scale parameter. If R1 is 70%, R2 is 15%, based on Table 7, the terminal device may determine that the value of the first diversity information is 6. It may be understood that, for different types of data, the diversity threshold may also be set to different values.

Table 7

| Proportion | First diversity information |
|---|---|
| R1<10% | 1 |
| 10%≤R1<20% | 2 |
| 20%≤R1<40% | 3 |
| 40%≤R1<60% | 4 |
| R1≥60%, R2<10% | 5 |
| R1≥60%, 10%≤R2<20% | 6 |
| R1≥60%, 20%≤R2<40% | 7 |
| R1≥60%, R2≥40% | 8 |

It may be understood that the value or information in Table 7 is merely an example, and is not used as a limitation for description. Values or information of the proportion and/or the first diversity information may be changed based on an actual requirement.

In a possible implementation, in Manner 3, the first diversity information may also be used to determine whether the terminal device sends the third data to the network device. For example, when the first diversity information meets a threshold requirement, the terminal device may determine to send the third data to the network device. That the to-be-transmitted data obtained by the terminal device includes the N channel characteristics is still used as an example. If the determined first diversity information is greater than the first threshold, the terminal device may send a set of the N channel characteristics to the network device, or may send a part of the channel characteristics.

In view of Manner 3, when there are a plurality of types of data that needs to be sent, the terminal device may respectively use two different types of data as the first data and the third data, then determine the first diversity information based on the first data, the set of second data, the set of third data, and the set of fourth data, and determine, based on the first diversity information, whether to send the first data and/or the third data. In addition, alternatively, the terminal device separately uses a plurality of different types of data as the first data, the third data, the fourth data, the fifth data, and the like, further determines the first diversity information based on the first data, the third data, the fourth data, the fifth data, and the like, and determine, based on the first diversity information, whether to send any one or more of the first data, the third data, the fourth data, the fifth data, and the like. It may be understood that the different types of data herein may specifically include training data and sensing data, or may include at least two channel characteristics, or may include two pieces of data with different diversity information configurations.

In a possible implementation, in this application, if the network device indicates a type of data to the terminal device by using indication information, the terminal device may preferably send, to the network device, data of the type indicated by the network device. In addition, the network device may alternatively indicate priorities of data to the terminal device by using indication information. In this case, the terminal device may preferably send one or more types of data with high priorities to the network device. The high priority means that the priority is greater than or not less than a priority threshold.

Preferably sending the data of the type indicated by the network device means that the terminal device may send the data of the type to the network device without determining whether a sending requirement is met. Whether the sending requirement is met is determined based on the first diversity information, and the first diversity information is determined based on the data of the type. In other words, determining, based on the first diversity information, whether to send the data of the type may be ignored. For the data of the type indicated by the network device, refer to the descriptions in S102. In addition, when there is no data indicated by the network device, the terminal device may determine, in the manner shown in this application, whether to send the first data to the network device. In this case, the first data does not include the data of the type indicated by the network device.

In addition, preferably sending the data of the type indicated by the network device may alternatively mean that the terminal device considers sending other data to the network device only when the data of the type indicated by the network device does not meet the sending requirement. When the network device indicates the type of the data to the terminal device, the terminal device may use the type of data as the first data. Further, the terminal device may determine the first diversity information with reference to the manner shown in this application. If the terminal device determines, based on the first diversity information, to send the first data, the terminal device may no longer send other data that is not of the type indicated by the network device, to reduce transmission overheads. In addition, if the terminal device determines, based on the first diversity information, not to send the first data, the terminal device may determine the first diversity information based on the other data, and determine, based on the first diversity information, whether to send the other data.

Optionally, when the network device indicates data to the terminal device, for example, indicates a type of the data or a priority of the type, if the terminal device determines that data that needs to be sent does not include the data of the type indicated by the network device, the terminal device may send a negative acknowledgement to the network device, to indicate that the data of the indicated type does not exist. Alternatively, if data that needs to be sent by the terminal device includes the data of the type indicated by the network device, and the terminal device determines, based on the first diversity information determined based on the data of the type indicated by the network device, not to send the data of the type indicated by the network device, the terminal device may send a negative acknowledgement to the network device. Further, optionally, the terminal device may further determine the first data based on seventh data. The seventh data may include data other than the data of the type indicated by the network device in the data that needs to be sent by the terminal device. In other words, a type of the seventh data does not include the type indicated by the network device.

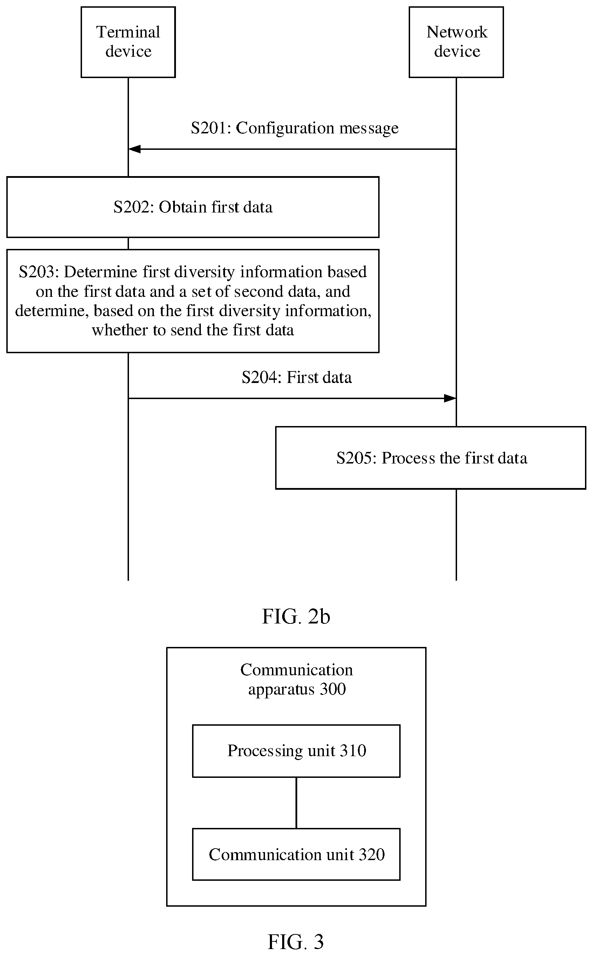

As shown in FIG. 2b, an interaction process between a terminal device and a network device is used as an example. A communication method provided in this embodiment of this application may further include the following steps.

S201: The network device sends a configuration message to the terminal device.

Correspondingly, the terminal device may receive the configuration message.

Optionally, the configuration message may include a value and/or a type of data that are/is indicated by the network device. Therefore, the terminal device may determine, based on the value and/or the type of data indicated by the network device, data (namely, first data) that needs to be reported. In addition, the configuration message may include first indication information. The first indication information may indicate that difference information includes at least one of a value difference, a distance difference, an amplitude difference, and a phase difference. Specifically, the first indication information may specifically indicate a correspondence between the first data and at least one of a correspondence number, a difference type, and a diversity threshold. Alternatively, the configuration message may include first indication information and information that indicates a correspondence between the first data and at least one of a correspondence number and a diversity threshold.

S201 is an optional step. In other words, content included in the configuration message may alternatively be obtained by the terminal device through preconfiguration, predefinition, or definition in a protocol.

S202: The terminal device obtains the first data.

For the first data, refer to the descriptions in S101.

For example, if the configuration message in S201 includes the type of data indicated by the network device, the first data may be determined based on the type. For example, the terminal device may determine, as the first data from the data that needs to be sent, data of a type same as the type indicated by the network device.

S203: The terminal device determines first diversity information based on the first data and a set of second data, and determines, based on the first diversity information, to send the first data.

For the second data, refer to the descriptions in S102. Optionally, if the configuration message in S201 includes the value and/or the type of data that are/is indicated by the network device, the second data may be determined based on the value and/or the type of data that indicated by the network device. For example, the second data includes the value and/or the type of data indicated by the network device.

For a manner of determining the first diversity information by the terminal device, refer to the Manner 1 to Manner 3 of determining the first diversity information based on the difference information. Details are not described herein again.

In addition, for a manner in which the terminal device determines, based on the first diversity information, to send the first data, refer to the descriptions of determining, based on the first diversity information, whether to send the first data in S102. For example, when the first diversity information is not less than (or greater than) a first threshold, the terminal device may determine to send the first data.

S204: If it is determined to send the first data, the terminal device sends the first data to the network device.

Correspondingly, the network device receives the first data.

S205: The network device processes the first data.

Optionally, in S205, the network device may perform model training or determine a sensing result based on the first data.

For example, when the first data includes training data, in S205, processing performed by the network device based on the first data includes performing model training based on the training data. For another example, when the first data includes sensing data, in S205, processing performed by the network device based on the first data includes performing sensing analysis based on the sensing data, to obtain the sensing result.

Optionally, the network device may further update sixth data based on the first data. For example, the network device may determine, based on historical data, the data indicated by the network device. When the procedure shown in FIG. 2b needs to be performed again, the network device may determine the configuration message in S201 based on the data indicated by the network device.

It may be understood that, if the terminal device determines, based on the first diversity information, not to send the first data in S203, S204 and S205 may be ignored.

Optionally, the method shown in FIG. 2b may further include S206.

S206: The terminal device sends a negative acknowledgement to the network device, to indicate that data of the type indicated by the network device does not exist.

In a possible implementation of S206, if the configuration message in S201 includes the type of the data indicated by the network device, and the first data shown in S202 includes the type of the data indicated by the network device, in S203, if the terminal device determines, based on the first diversity information, not to send the first data, the terminal device may perform S206, to indicate, to the network device, that diversity of the data of the type is low.

Optionally, after S206, the terminal device may further perform S207: determining the first data based on seventh data. After S207, the terminal device may further perform S203 to S205. For implementations of S203 to S205, refer to the foregoing descriptions. Details are not described again. Therefore, based on S207, when the data of the type indicated by the network device exists but the diversity of the data of the type indicated by the network device is low, the terminal device may actively report data of another type, to improve data processing accuracy. The seventh data includes data other than data that is of the type indicated by the network device and that is determined in the data that needs to be sent by the terminal device.

In another possible implementation of S206, in S202, if the terminal device determines that the data that needs to be sent does not include the data of the type indicated by the network device, the terminal device may perform S206. In addition, in S202, the terminal device may determine the first data based on the seventh data. Refer to the descriptions in S207. The seventh data includes the data that is of the type indicated by the network device and that is determined in the data that needs to be sent by the terminal device. Therefore, when the data that needs to be sent by the terminal device does not include the data of the type required by the network device, the terminal device may actively report data of another type, to improve data processing accuracy.

Based on a same concept, an embodiment of this application further provides a communication apparatus. The communication apparatus may include corresponding hardware structures and/or software modules for performing the functions shown in the foregoing methods. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 3 to FIG. 5 are diagrams of structures of possible communication apparatuses according to embodiments of this application. The communication apparatus may be configured to implement the functions of the terminal device and/or the network device in the foregoing method embodiments. Therefore, beneficial effect of the foregoing method embodiments can also be implemented. In a possible implementation, the communication apparatus may be the terminal device shown in FIG. 1. For related details and effect, refer to the descriptions in the foregoing embodiments.

As shown in FIG. 3, a communication apparatus 300 includes a processing unit 310 and a communication unit 320. The communication unit 320 may alternatively be a transceiver unit, an input/output interface, or the like. The communication apparatus 300 may be configured to implement the functions of the terminal device in the method embodiments/method embodiment shown in FIG. 2a and/or FIG. 2b.

Optionally, when the methods/method performed by the terminal device shown in FIG. 2a and/or FIG. 2b are/is implemented, the communication unit 320 may be configured to obtain first data. The processing unit 310 may be configured to determine, based on the first diversity information, whether to send the first data.

Optionally, the processing unit 310 may be further configured to determine the first diversity information based on difference information and a first correspondence.

Optionally, the difference information includes a set of first parameters. The processing unit 310 may be further configured to determine the set of first parameters based on the first data and a set of second data.

Optionally, the set of second data includes a plurality of pieces of second data, and the difference information includes a second parameter. The processing unit 310 may be further configured to determine a plurality of first parameters based on the first data and the set of second data, where the second parameter is an average value of the plurality of first parameters.

Optionally, the set of second data includes a plurality of pieces of second data, and the difference information includes a third parameter. The processing unit 310 may be further configured to determine an average value of the plurality of pieces of second data, where the third parameter is a difference between the first data and the average value.

Optionally, the communication unit 320 may be further configured to receive first indication information from the second apparatus, where the first indication information may indicate that the difference information includes at least one of a value difference, a distance difference, an amplitude difference, and a phase difference.

Optionally, the processing unit 310 may be further configured to determine the first diversity information based on second diversity information and third diversity information.

Optionally, the processing unit 310 may be further configured to determine the first diversity information based on a first proportion and a second correspondence.

Optionally, the processing unit 310 may be further configured to determine, based on the first diversity information and a first threshold, whether to send third data.

Optionally, the processing unit 310 may be further configured to determine, based on the first diversity information and a first threshold, whether to send the first data.

In embodiments of this application, division of modules is an example, and is merely logical function division. In an actual implementation, there may be another division manner. In addition, function modules in embodiments of this application may be integrated into one processor, or each of the modules may exist alone physically, or two or more modules may be integrated into one module. The foregoing integrated module may be implemented in a form of hardware, or may be implemented in a form of software function module.

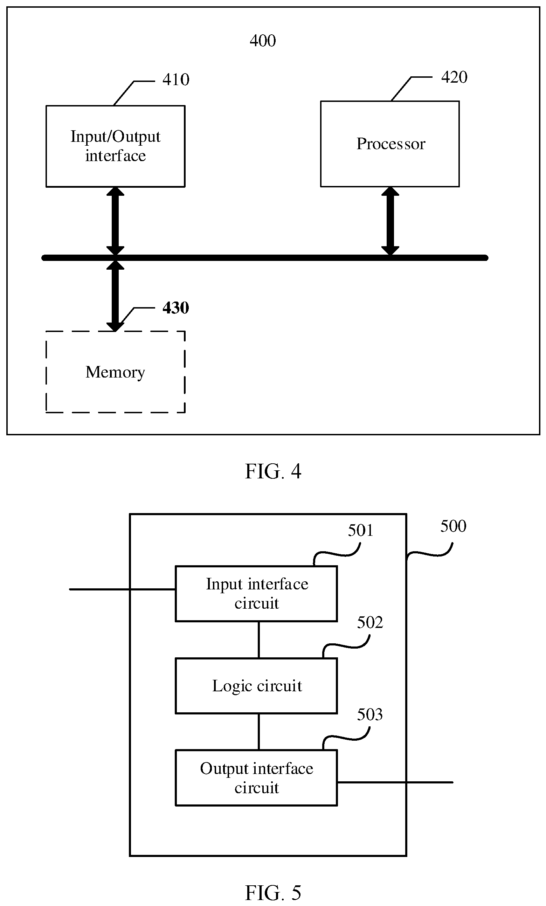

FIG. 4 shows a communication apparatus 400 according to an embodiment of this application. The communication apparatus 400 is configured to implement the communication method provided in this application. The communication apparatus 400 may be a communication apparatus to which the communication method is applied, a component in the communication apparatus, or an apparatus that can be used in a matching manner with the communication apparatus. The communication apparatus 400 may be a first apparatus. The communication apparatus 400 may be a chip system or a chip. In embodiments of this application, the chip system may include a chip, or may include a chip and another discrete component. The communication apparatus 400 includes at least one processor 420, configured to implement the communication method provided in embodiments of this application. The communication apparatus 400 may further include an input/output interface 410, and the input/output interface may include an input interface and/or an output interface. In this embodiment of this application, the input/output interface 410 may be configured to communicate with another apparatus via a transmission medium, and a function of the input/output interface 410 may include sending and/or receiving. For example, when the communication apparatus 400 is a chip, the communication apparatus 400 performs transmission with another chip or device through the input/output interface 410. The processor 420 may be configured to implement the method shown in the foregoing method embodiment.

For example, the processor 420 may be configured to perform an action performed by the processing unit 310, and the input/output interface 410 may be configured to perform an action performed by the communication unit 320. Details are not described again.

Optionally, the communication apparatus 400 may further include at least one memory 430, configured to store program instructions and/or data. The memory 430 is coupled with the processor 420. The coupling in embodiments of this application may be an indirect coupling or a communication connection between apparatuses, units, or modules in an electrical form, a mechanical form, or another form, and is used for information exchange between the apparatuses, the units, or the modules. The processor 420 and the memory 430 may perform an operation cooperatively. The processor 420 may execute the program instructions stored in the memory 430. At least one of the at least one memory may be integrated with the processor.

In this embodiment of this application, the memory 430 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instruction or data structure and that can be accessed by a computer, but is not limited thereto. The memory in embodiments of this application may alternatively be a circuit or any other apparatus that can implement a storage function, and is configured to store the program instructions and/or the data.

In embodiments of this application, the processor 420 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps in the methods disclosed with reference to embodiments of this application may be directly performed and completed by a hardware processor, or may be performed and completed by using a combination of hardware and software modules in the processor.

FIG. 5 shows a communication apparatus 500 according to an embodiment of this application. The communication apparatus 500 is configured to implement the communication method provided in this application. The communication apparatus 500 may be a communication apparatus to which the communication method shown in embodiments of this application is applied, a component in the communication apparatus, or an apparatus that can be used in a matching manner with the communication apparatus. The communication apparatus 500 may be a first apparatus. The communication apparatus 500 may be a chip system or a chip. In embodiments of this application, the chip system may include a chip, or may include a chip and another discrete component. A part or all of the communication method provided in the foregoing embodiments may be implemented by hardware or software. When the communication method is implemented by hardware, the communication apparatus 500 may include an input interface circuit 501, a logic circuit 502, and an output interface circuit 503.

Optionally, for example, the apparatus is configured to implement functions of a receiving end. The input interface circuit 501 may be configured to perform a receiving action performed by the communication unit 320, the output interface circuit 503 may be configured to perform a sending action performed by the communication unit 320, and the logic circuit 502 may be configured to perform an action performed by the processing unit 310. Details are not described again.

Optionally, in a specific implementation, the communication apparatus 500 may be a chip or an integrated circuit.

Some or all of operations and functions performed by the communication apparatus described in the foregoing method embodiments of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. When the computer program product runs on a computer, the computer is enabled to perform the foregoing method embodiments.

An embodiment of this application further provides a communication system, including the foregoing terminal device and/or network device. For example, the terminal device may be configured to perform the method shown in FIG. 2a. For another example, the terminal device and the network device may be configured to perform the method shown in FIG. 2b.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

It should be noted that a part of this patent application document includes content protected by copyright. Except for making copies of patent documents of the Patent Office or recorded content of patent documents, the copyright owner reserves the copyright.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, comprising:

    obtaining, by a first apparatus, first data; and
    determining, by the first apparatus based on first diversity information, whether to send the first data, wherein the first diversity information is determined based on the first data and a set of second data, and the second data comprises historical data sent by the first apparatus and/or data indicated by a second apparatus.

2.  The method according to claim 1, wherein the data indicated by the second apparatus comprises a value and/or a type of the data indicated by the second apparatus.

3.  The method according to claim 1 or 2, wherein the first diversity information is determined based on difference information between the first data and the second data.

4.  The method according to claim 3, wherein the method further comprises:
    determining, by the first apparatus, the first diversity information based on the difference information and a first correspondence, wherein the first correspondence comprises a correspondence between the difference information and the first diversity information.

5.  The method according to claim 3 or 4, wherein the difference information comprises a set of first parameters, and the method further comprises:
    determining, by the first apparatus, the set of first parameters based on the first data and the set of second data, wherein each first parameter comprises a difference between the first data and one or more pieces of second data.

6.  The method according to claim 3 or 4, wherein the set of second data comprises a plurality of pieces of second data, the difference information comprises a second parameter, and the method further comprises:
    determining, by the first apparatus, a plurality of first parameters based on the first data and the set of second data, wherein each first parameter comprises a difference between the first data and one or more pieces of second data, and the second parameter is an average value of the plurality of first parameters.

7.  The method according to claim 3 or 4, wherein the set of second data comprises a plurality of pieces of second data, the difference information comprises a third parameter, and the method further comprises:
    determining, by the first apparatus, an average value of the plurality of pieces of second data, wherein the third parameter is a difference between the first data and the average value.

8.  The method according to any one of claims 3 to 7, wherein
    the difference information comprises at least one of a value difference, a distance difference, an amplitude difference, and a phase difference.

9.  The method according to claim 8, wherein the method further comprises:
    receiving, by the first apparatus, first indication information from the second apparatus, wherein the first indication information indicates that the difference information comprises at least one of the value difference, the distance difference, the amplitude difference, and the phase difference.

10. The method according to any one of claims 1 to 9, wherein the determining, by the first apparatus based on first diversity information, whether to send the first data comprises:
    determining, by the first apparatus based on the first diversity information and a first threshold, whether to send the first data.

11. The method according to any one of claims 1 to 10, wherein the first diversity information is further determined based on third data.

12. The method according to claim 11, wherein the method further comprises:
determining, by the first apparatus, the first diversity information based on second diversity information and third diversity information, wherein the second diversity information is determined based on the difference information between the first data and the second data, the third diversity information is determined based on difference information between the third data and fourth data, and the fourth data comprises the historical data sent by the first apparatus and/or the data indicated by the second apparatus.

13. The method according to claim 12, wherein the first diversity information is determined based on a value of the second diversity information, a second threshold corresponding to the second diversity information, a value of the third diversity information, and a third threshold corresponding to the third diversity information.

14. The method according to claim 13, wherein the method further comprises:
determining, by the first apparatus, the first diversity information based on a first proportion and a second correspondence, wherein the second correspondence comprises a correspondence between the first proportion and the first diversity information, and the first proportion is determined based on a quantity of diversity information that is in a diversity information set and whose value is greater than a threshold corresponding to the diversity information and a quantity of diversity information comprised in the diversity information set, wherein the diversity information set comprises the second diversity information and the third diversity information.

15. The method according to any one of claims 11 to 14, wherein the method further comprises:
determining, by the first apparatus based on the first diversity information and the first threshold, whether to send the third data.

16. The method according to any one of claims 1 to 15, wherein the first data comprises training data and/or sensing data.

17. The method according to any one of claims 10 to 15, wherein the third data comprises training data and/or sensing data.

18. A communication apparatus, comprising:

a communication unit, configured to obtain first data; and
a processing unit, configured to determine, based on first diversity information, whether to send the first data, wherein the first diversity information is determined based on the first data and a set of second data, and the second data comprises historical data sent by a first apparatus and/or data indicated by the second apparatus.

19. The apparatus according to claim 18, wherein the data indicated by the second apparatus comprises a value and/or a type of data of the second apparatus.

20. The apparatus according to claim 18 or 19, wherein the first diversity information is determined based on difference information between the first data and the second data.

21. The apparatus according to claim 20, wherein the processing unit is further configured to:
determine the first diversity information based on the difference information and a first correspondence, wherein the first correspondence comprises a correspondence between the difference information and the first diversity information.

22. The apparatus according to claim 20 or 21, wherein the difference information comprises a set of first parameters, and the processing unit is further configured to:
determine, by the first apparatus, the set of first parameters based on the first data and the set of second data, wherein each first parameter comprises a difference between the first data and one or more pieces of second data.

23. The apparatus according to claim 20 or 21, wherein the set of second data comprises a plurality of pieces of second data, the difference information comprises a second parameter, and the processing unit is further configured to:
determine a plurality of first parameters based on the first data and the set of second data, wherein each first parameter comprises a difference between the first data and one or more pieces of second data, and the second parameter is an average value of the plurality of first parameters.

24. The apparatus according to claim 20 or 21, wherein the set of second data comprises a plurality of pieces of second data, the difference information comprises a third parameter, and the processing unit is further configured to: determine an average value of the plurality of pieces of second data, wherein the third parameter is a difference between the first data and the average value.

25. The apparatus according to any one of claims 20 to 24, wherein
the difference information comprises at least one of a value difference, a distance difference, an amplitude difference, and a phase difference.

26. The apparatus according to claim 25, wherein the communication unit is further configured to:
receive first indication information from the second apparatus, wherein the first indication information indicates that the difference information comprises at least one of the value difference, the distance difference, the amplitude difference, and the phase difference.

27. The apparatus according to any one of claims 18 to 26, wherein the processing unit is specifically configured to:
determine, based on the first diversity information and a first threshold, whether to send the first data.

28. The apparatus according to any one of claims 18 to 27, wherein the first diversity information is further determined based on third data.

29. The apparatus according to claim 28, wherein the processing unit is further configured to:
determine the first diversity information based on second diversity information and third diversity information, wherein the second diversity information is determined based on the difference information between the first data and the second data, the third diversity information is determined based on difference information between the third data and fourth data, and the fourth data comprises the historical data sent by the first apparatus and/or the data indicated by the second apparatus.

30. The apparatus according to claim 29, wherein the first diversity information is determined based on a value of the second diversity information, a second threshold corresponding to the second diversity information, a value of the third diversity information, and a third threshold corresponding to the third diversity information.

31. The apparatus according to claim 30, wherein the processing unit is further configured to:
determine the first diversity information based on a first proportion and a second correspondence, wherein the second correspondence comprises a correspondence between the first proportion and the first diversity information, and the first proportion is determined based on a quantity of diversity information that is in a diversity information set and whose value is greater than a threshold corresponding to the diversity information and a quantity of diversity information comprised in the diversity information set, wherein the diversity information set comprises the second diversity information and the third diversity information.

32. The apparatus according to any one of claims 28 to 31, wherein the processing unit is further configured to:
determine, based on the first diversity information and a first threshold, whether to send the third data.

33. The apparatus according to any one of claims 18 to 32, wherein the first data comprises training data and/or sensing data.

34. The apparatus according to any one of claims 18 to 31, wherein the third data comprises training data and/or sensing data.

35. A communication apparatus, comprising a processor, configured to implement the method according to any one of claims 1 to 17 by using a logic circuit or by executing code instructions.

36. The apparatus according to claim 35, further comprising a memory and/or an interface circuit, wherein the memory is configured to store the code instructions, and the interface circuit is configured to receive a signal from a communication apparatus other than the communication apparatus and transmit the signal to the processor, or send a signal from the processor to a communication apparatus other than the communication apparatus.

37. A chip system, wherein the chip system comprises a processor, and the processor is configured to execute computer instructions to implement the method according to any one of claims 1 to 17.

38. A computer-readable storage medium, wherein the storage medium stores a computer program or instructions, and when the computer program or the instructions are executed by a communication apparatus, the method according to any one of claims 1 to 17 is implemented.

39. A computer program product, wherein the computer program product stores computer readable instructions, and when the computer readable instructions are run, the method according to any one of claims 1 to 17 is performed.

40. A communication system, comprising a first apparatus and a second apparatus, wherein the first apparatus is configured to perform the method according to any one of claims 1 to 17.

FIG. 1

S101: A terminal device obtains first data

S102: The terminal device determines, based on first diversity information, whether to send the first data

FIG. 2a

```
┌──────────┐                                    ┌──────────┐
│ Terminal │                                    │ Network  │
│  device  │                                    │  device  │
└────┬─────┘                                    └────┬─────┘
     │                                               │
     │         S201: Configuration message           │
     │◄──────────────────────────────────────────────│
     │                                               │
┌────┴──────────────────────────────────────┐        │
│         S202: Obtain first data            │        │
└────┬──────────────────────────────────────┘        │
     │                                               │
┌────┴──────────────────────────────────────┐        │
│ S203: Determine first diversity information based   │
│ on the first data and a set of second data, and     │
│ determine, based on the first diversity information,│
│         whether to send the first data     │        │
└────┬──────────────────────────────────────┘        │
     │              S204: First data                 │
     │──────────────────────────────────────────────►│
     │                                               │
     │                           ┌───────────────────┴──────────┐
     │                           │  S205: Process the first data │
     │                           └───────────────────┬──────────┘
     │                                               │
```

FIG. 2b

```
┌──────────────────────────────────────┐
│          Communication               │
│          apparatus 300               │
│                                      │
│   ┌──────────────────────────────┐   │
│   │     Processing unit 310       │   │
│   └──────────────┬───────────────┘   │
│                  │                   │
│   ┌──────────────┴───────────────┐   │
│   │    Communication unit 320     │   │
│   └──────────────────────────────┘   │
└──────────────────────────────────────┘
```

FIG. 3

400

410

420

Input/Output
interface

Processor

430

Memory

FIG. 4

500

501

Input interface
circuit

502

Logic circuit

503

Output interface
circuit

FIG. 5

## INTERNATIONAL SEARCH REPORT

| International application No. |
| --- |
| **PCT/CN2022/123464** |

### A. CLASSIFICATION OF SUBJECT MATTER

G06N 20/00(2019.01)i

According to International Patent Classification (IPC) or to both national classification and IPC

### B. FIELDS SEARCHED

Minimum documentation searched (classification system followed by classification symbols)

IPC:H04L G06N

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, ENTXT, DWPI, CJFD, 3GPP: 差异, 多样性, 发送, 感知数据, 训练数据, 减少, 降低, 开销, difference, diversity, send+, transmit+, training data, reduc+, lower+, overhead

### C. DOCUMENTS CONSIDERED TO BE RELEVANT

| Category* | Citation of document, with indication, where appropriate, of the relevant passages | Relevant to claim No. |
| --- | --- | --- |
| X | CN 112825247 A (BEIJING SOGOU TECHNOLOGY DEVELOPMENT CO., LTD.) 21 May 2021 (2021-05-21) description, paragraphs [0043]-[0127] | 1, 3-8, 10-18, 20-25, 27-40 |
| Y | CN 112825247 A (BEIJING SOGOU TECHNOLOGY DEVELOPMENT CO., LTD.) 21 May 2021 (2021-05-21) description, paragraphs [0043]-[0127] | 1, 2, 9, 18, 19, 26 |
| Y | CN 113128694 A (BEIJING NOVAUTO TECHNOLOGY CO., LTD.) 16 July 2021 (2021-07-16) description, paragraphs [0039]-[0051] | 1, 2, 9, 18, 19, 26 |
| A | CN 112749812 A (HUAWEI TECHNOLOGIES CO., LTD.) 04 May 2021 (2021-05-04) entire document | 1-40 |
| A | CN 114079528 A (HUAWEI TECHNOLOGIES CO., LTD.) 22 February 2022 (2022-02-22) entire document | 1-40 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 June 2023** | **06 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/123464**

| Patent document cited in search report | | | Publication date (day/month/year) | Patent family member(s) | Publication date (day/month/year) |
|---|---|---|---|---|---|
| CN | 112825247 | A | 21 May 2021 | None | |
| CN | 113128694 | A | 16 July 2021 | None | |
| CN | 112749812 | A | 04 May 2021 | None | |
| CN | 114079528 | A | 22 February 2022 | None | |

Form PCT/ISA/210 (patent family annex) (July 2022)